# EUROPEAN PATENT APPLICATION

(11) **EP 2 339 160 A2**
(43) Date of publication of application: **29.06.2011**
(21) Application number: 10195156.4
(22) Date of filing: 15.12.2010
(51) Int. Cl.: F02K 7/02

(54) **Pulse detonation turbine engine**

(30) Priority: 23.12.2009 US 645480
(71) Applicant: General Electric Company, Schenectady, NY 12345 (US)
(72) Inventor: Westervelt, Eric Richard, Niskayuna, NY 12309 (US); Hofer, Douglas Carl, Niskayuna, NY 12309 (US); Joshi, Narendra Digamber, Niskayuna, NY 12309 (US); Siu, Kit Yan, Niskayuna, NY 12309 (US); Shi, Ruijie, Niskayuna, NY 12309 (US); Rasheed, Adam, Niskayuna, NY 12309 (US); Tangirala, Venkat Eswarlu, Niskayuna, NY 12309 (US)
(74) Representative: Gray, Thomas

(57) **Abstract**

A pulse detonation turbine engine (PDTE) (50) includes at least one controllable multi-tube pulse detonation combustor (PDC) (54) configured to initiate firing of one or more pulse detonation tubes in response to operation of a plurality of controllable peripheral PDC components (57) to regulate PDTE output characteristics. A control system including a programmable controller (52) directed by algorithmic software operates to generate control inputs for the plurality of controllable peripheral PDC components (57) in response to PDTE input conditions, such that one or more PD tube controllable inputs can be different for at least one PD tube relative to another PD tube within the multi-tube PDC (54), and further such that detonation timing can be different for at least one PD tube relative to another PD tube within the multi-tube PDC (54).

## Description

The invention relates generally to pulse detonation engines (PDEs), and more particularly to operational techniques for controlling outputs of multi-tube PDEs in response to control of corresponding pulse detonation combustor outputs.

Pulse detonation combustors create high pressure and temperature detonation waves by combusting a mixture of gas (typically air) and a hydrocarbon fuel. The detonation waves exit pulse detonation tubes as pulses, thus providing thrust or temperature and pressure rise.

With the recent development of pulse detonation technology, various efforts have been underway to use this technology in practical applications. An example of such a practical application is the development of a pulse detonation engine (PDE) where the hot detonation products are directed through an exit nozzle to generate thrust for aerospace propulsion. Another example is the development of a "hybrid" engine that uses a combination of both conventional gas turbine engine technology and pulse detonation (PD) technology to maximize operation efficiency. These pulse detonation turbine engines (PDTE)s can be used for aircraft propulsion or as a means to generate power in ground-based power generation systems.

It is for either of these applications that the following discussion will be directed. It is noted that the following discussion will be directed to "pulse detonation engines" (i.e. PDEs). However, the use of this term is intended to include pulse detonation engines, pulse detonation turbine engines, and the like.

Today, no known control system has been demonstrated to regulate the output of a PDTE. The PDTE is envisioned to replace existing gas turbine engines, which are used to operate machinery, generate electrical power or provide aerospace propulsion. These engines need the ability to operate at different operating points as required by the user in order to be useful. This may include, for example, different shaft speeds, power levels due to increased load, or targeted emission levels. Further, gas turbine engines need to be robust against variations in inlet conditions such as inlet temperature or variations in fuel supply pressure.

In view of the foregoing, it would be advantageous to provide one or more robust operational techniques to reliably control/regulate the output of a complete PDTE system.

### BRIEF DESCRIPTION

Briefly, in accordance with one embodiment of the invention, a pulse detonation turbine engine (PDTE) comprises:
a plurality of controllable peripheral PDC components;
a controllable multi-tube pulse detonation combustor (PDC) configured to initiate firing of one or more PD tubes in response to operation of the plurality of controllable peripheral PDC components to regulate PDTE output characteristic; and
a control system comprising a programmable controller directed by algorithmic software to generate inputs for the plurality of controllable peripheral PDC components in response to PDTE input conditions, such that one or more PD tube controllable inputs can be different for at least one PD tube relative to another PD tube within the multi-tube PDC, and further such that detonation timing can be different for at least one PD tube relative to another PD tube within the multi-tube PDC.

As used above, a plurality of controllable peripheral PDC components may include, for example, and without limitation, one or more fuel valves, one or more air valves, and one or more ignition elements.

### DRAWINGS

There follows a detailed description of embodiments of the invention by way of example only with reference to the accompanying drawings, in which:
Figure 1 illustrates a PDTE single-loop control system according to one embodiment of the invention;
Figure 2 illustrates a PDTE two-loop control system according to one embodiment of the invention;
Figure 3 illustrates a PDTE three-loop control system according to one embodiment of the invention;
Figure 4 is a simplified control system diagram illustrating a programmable controller configured with algorithmic software to regulate a plurality of PDTE or PDE output characteristics according to one embodiment of the invention;
Figure 5 is a more detailed system diagram illustrating a PDTE that employs a controllable multi-tube pulse detonation combustor according to one embodiment of the invention;
Figure 6 is a cross-sectional axial view of a single multi-tube PDC suitable for use with the PDTE shown in Figure 5 according tone embodiment; and
Figure 7 is a diagram illustrating ramp-up and ramp-down phases of the PDTE shown in Figure 5 according to one embodiment.

While the above-identified drawing figures set forth alternative embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope of the principles of this invention.

### DETAILED DESCRIPTION

As used herein, a pulse detonation combustor is understood to mean any device or system that produces both a pressure rise and velocity increase from a series of repeated detonations or quasi-detonations within the tube. A "quasi-detonation" is a supersonic turbulent combustion process that produces a pressure rise and velocity increase higher than the pressure rise and velocity increase produced by a deflagration wave. Embodiments of pulse detonation tubes include a means of igniting a fuel/oxidizer mixture, for example a fuel/air mixture, and a detonation chamber, in which pressure wave fronts initiated by the ignition process coalesce to produce a detonation or quasi-detonation. Each detonation or quasi-detonation is initiated either by external ignition, such as spark discharge or laser pulse, or by gas dynamic processes, such as shock focusing, auto ignition or by another detonation (i.e. crossfire). As used herein, a detonation is understood to mean either a detonation or quasi-detonation.

The primary means of control for existing gas turbine engines includes fuel flow and inlet guide vanes. These control means typically use simple maps that correlate fuel-flow and inlet guide vane (IGV) position with heat-release in the combustor or output power. Control of a PDTE may require use of these same handles, and will require additional control of PDC component timing. The PDC components to be timed include, without limitation, the air valve, fuel valve, and igniter (such as spark igniter). These components may be timed to affect fuel and/or air fill fraction, purge fraction, equivalence ratio distribution within the pulse detonation tubes, skip firing (i.e., the timing can be arranged such that air is passed through the tube, but no fuel and no ignition), and tube-to-tube relative timing (i.e., firing pattern).

As used herein, PDC is considered the overall combustor for the engine. It can be arranged in a can-annular arrangement, in which case it may include an array of one or more pulse detonation bundles (PDB), each of which can include one or more pulse detonation combustor chambers (PDCC)s. The PDCCs often take the form of pulse detonation tubes (PDT)s or pipes, but they can have other shapes as well. Alternatively, the entire PDC may be arranged in a different manner, such as a full-annular arrangement or a rotating detonation type arrangement. Regardless, the term tube as used herein also includes the tubular or cylindrical openings within a full-annular or rotating detonation type combustor. The PDC can be the combustor for a pulse detonation turbine engine (PDTE) or for a pulse detonation engine (PDE). Embodiments of the invention described herein include single-loop and hierarchical controller designs comprising two or more control loops. Use of a hierarchical control system accommodates the significant difference in controller rates required by the PDC versus the controller rate required by the compressor-turbine portion of the PDTE.

The inner control loop regulates the PDC and the outer control loop regulates the output of the turbine for a two loop controller design. The outer control loop provides the reference to the inner control loop.

The innermost control loop regulates the individual tubes of the PDC for a three-loop controller design, while the intermediate loop regulates the PDC, and the outer control loop regulates the output of the turbine. The outer loop provides the references to the intermediate loop, and the intermediate loop provides the references to the innermost loop. A hierarchical structure advantageously enables modularization of the control hardware, facilitates controller tuning since the controller may be tuned loop-by-loop, and allows the loops to operate at different rates.

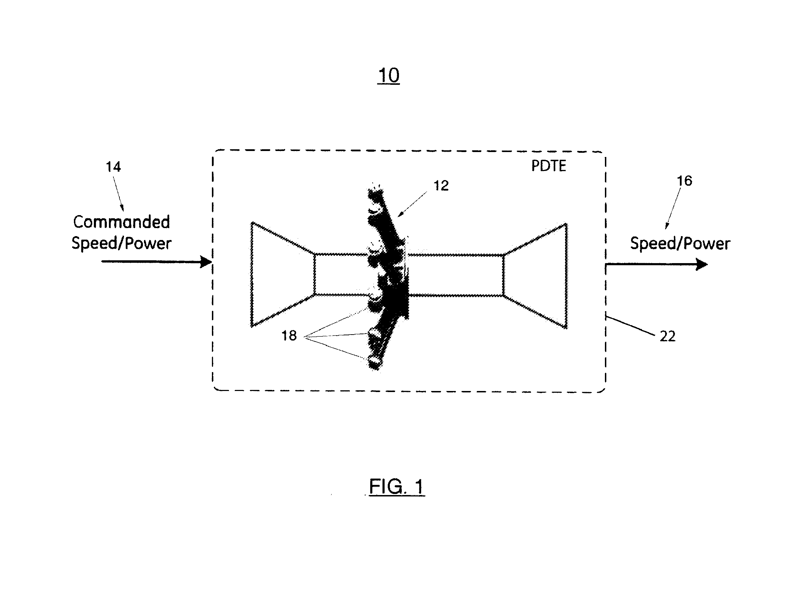

Figure 1 illustrates a single-loop control system 10 for a PDTE 22 according to one embodiment of the invention. According to one aspect, all regulation takes place at the same rate for the single-loop control system 10. A corresponding PDC 12 including pulse detonation tubes 18 is regulated in response to one or more desired overall commanded PDTE output characteristics 14 such as, without limitation, shaft speed, power, or emissions output. Achieved PDTE output characteristics 16 may include, without limitation, commanded speed, commanded power, or other thermodynamic or aerodynamic quantities. The PDC controller, discussed in further detail below, uses component timing to affect operation parameters such as, without limitation, fuel and/or air fill fraction, purge fraction, equivalence ratio distribution in the tubes 18, and tube-to-tube relative timing to achieve the desired PDTE operation characteristics. Fuel flow, fuel pressure, and inlet guide vane (IGV) position, among others, may be used as additional control handles, such as stated above.

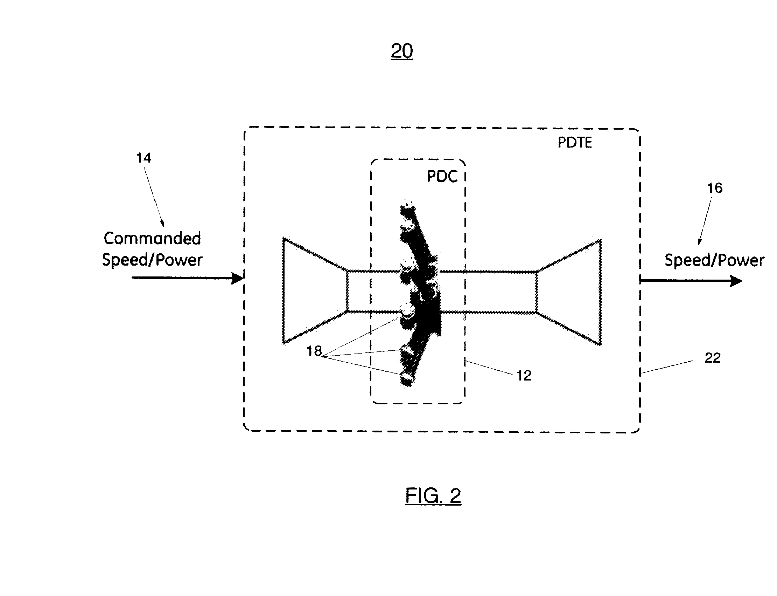

Figure 2 illustrates a PDTE two-loop control system 20 according to one embodiment of the invention. According to one aspect, the inner control loop regulates the PDC 12 and the outer control loop regulates the output 16 of the overall PDTE 22. The control loops may operate at different rates to handle the disparate time-scales required for the PDC control (microseconds) versus the overall gas turbine engine control (milliseconds). The outer loop provides the reference to the inner loop.

The outer control loop, for example, may convert commanded shaft speed, power, or emissions to one or more target turbine inlet conditions to be used by the inner loop as a reference. The inner control loop regulates the PDC 12 in response to desired overall commanded PDTE output characteristics 14 such as, without limitation, shaft speed, power, or emissions output. The inner control loop uses component timing as control handles. The component timing affects operation parameters such as, without limitation, fuel and/or air fill fraction, purge fraction, equivalence ratio distribution and tube-to-tube relative timing. Further, either the outer or inner control loops may use, without limitation, fuel flow, fuel pressure, and IGV position as additional control handles.

It can be appreciated that fuel-flow for a PDTE is not as simple as existing gas turbine engines. Fuel-flow for existing engines is regulated simply by operating a control valve to modulate the fuel-flow for more/less power, and to compensate for any variations in fuel supply pressure. The fuel-flow for a PDTE is controlled by either varying the fuel supply pressure or turning on/off additional fuel-valves on PD tubes 18, both of which change the equivalence ratio in the PD tubes 18. Further, fuel flow for a PDTE can be varied by changing the fuel-valve timing, as well as skip firing or completely shutting-down an entire PD combustor 12 or bundles of PD combustors. Consider for example, an optimum firing sequence represented by 1-2-3-4-5-6-1-2-3-4-5-6-1-2-.... One skip firing sequence for this embodiment is 1-2-3-4-5-6-wait-wait-wait-wait-wait-wait-1-2-3-4-5-6 that skips an entire firing cycle. Another skip firing sequence embodiment may be represented as, for example, 1-2-3-4-5-6-wait-wait-1-2-3-4-5-6. Yet another embodiment may be represented as 1-2-wait-4-5-6-1-2-wait-4-5-6. It can be appreciated that many other skip firing embodiments which are too numerous to describe herein are also encompassed by the principles described herein. Further, fuel flow for a PDTE can be varied by changing the firing pattern and/or firing pattern repetition rate of a plurality of pulse detonation tubes. Consider for example, an optimum firing pattern represented by 1-2-3-4-5-6-1-2-3-4-5-6-1-2-.... A different firing pattern may look like 1-3-2-4-5-6-1-3-2-4-5-6..., while another firing pattern may be represented as, for example, 2-1-6-5-4-3-2-1-6-5-4-3.... Any firing pattern can be repeated a desired number of times before repeating itself to achieve a desired repetition rate. It can be appreciated that many other firing pattern embodiments which are too numerous to describe herein are also encompassed by the principles described herein.

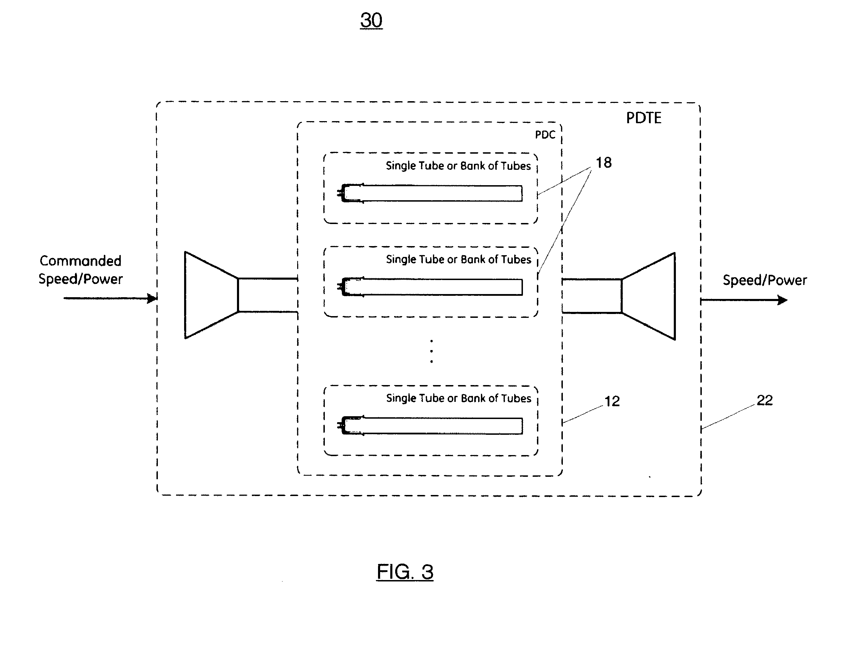

Figure 3 illustrates a PDTE three-loop control system 30 according to one embodiment of the invention. According to one aspect, the innermost loop regulates the individual tubes 18 (or banks of tubes) of the PDC 12, while the intermediate control loop regulates the PDC 12 (e.g. relative operation between the banks), and the outer control loop regulates the output of the overall PDTE 22. The outer control loop provides the reference to the intermediate loop, and the intermediate loop controller provides the references to the inner control loop. Further, either the outer or inner control loops may use, without limitation, fuel flow, fuel pressure, and IGV position as additional control handles. It can be appreciated that the operations for the single and double-loop embodiments described above also apply to the three-loop embodiment.

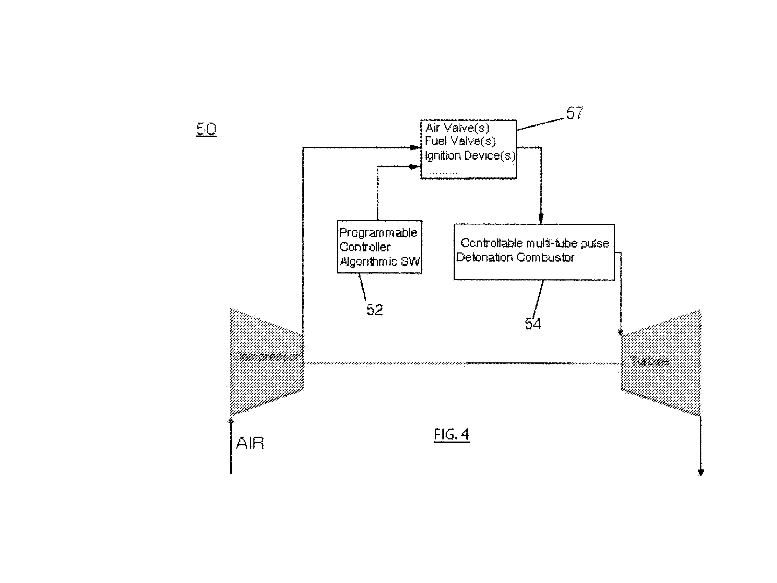

Figure 4 is a simplified control system 50 diagram illustrating a programmable controller 52 configured with algorithmic software to regulate a plurality of controllable peripheral PDC components 57 that may include, for example, and without limitation, one or more fuel valves, one or more air valves, and one or more ignition elements. A controllable multi-tube pulse detonation combustor (PDC) 54 is configured to initiate firing of one or more PD tubes in response to operation of the plurality of controllable peripheral PDC components 57 to regulate PDTE output characteristic such as, and without limitation, PDTE shaft speed, PDTE output power, and PDTE output emissions. A control system comprising a programmable controller 52 directed by algorithmic software operates to control operation timing parameters for the plurality of controllable peripheral PDC components 57 in response to PDTE input conditions, such that one or more PD tube operating conditions can be different for at least one PD tube relative to another PD tube within the multi-tube PDC 54, and further such that detonation timing can be different for at least one PD tube relative to another PD tube within the multi-tube PDC 54.

Programmable controller 52 is thus directed by the algorithmic software integrated therein to regulate the controllable PDC 54 including pulse detonation tubes 18 such that commanded PDTE output characteristics 14 are met in order to achieve, without limitation, a desired overall PDTE shaft speed, power, or emissions output 16.

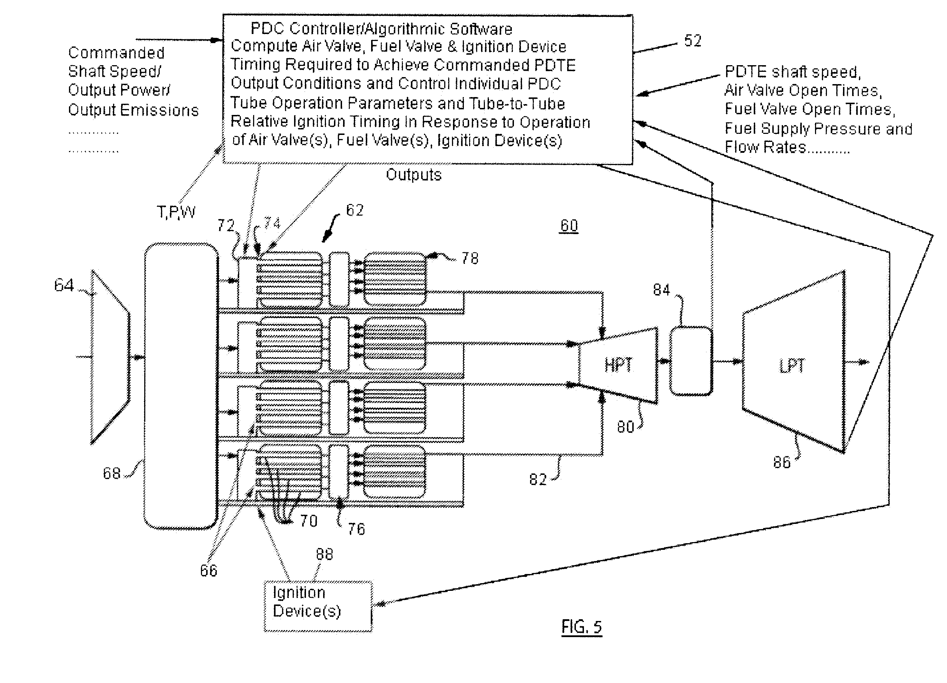

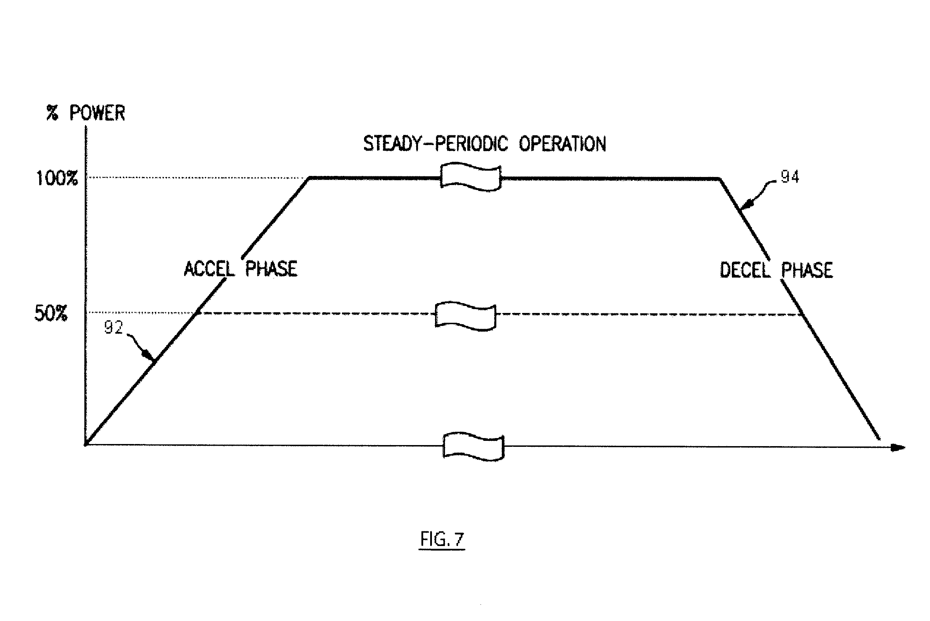

Figure 5 is a simplified system diagram illustrating a PDTE 60 that employs a controllable multi-tube pulse detonation combustor 62 according to another embodiment of the invention. A compressor 64 generates and supplies compressed air to each PDC bundle 66 via a common plenum 68. The supply of compressed air to each of the corresponding PDC bundle tubes 70 is controlled via a respective air inlet valve 72. Fuel supplied downstream from each air inlet valve 72 to each PDC bundle tube 70 is controlled via a corresponding fuel inlet valve 74 for each tube 70. The resultant air/fuel mixture passes through PDC bundles 66 depicted according to one embodiment in further detail in Figure 7, and exits through corresponding gas nozzles 76 into PDC transition elements 78 that are configured to transmit the resultant detonation products to a high pressure turbine 80 via inlet tubes 82. The resultant air/fuel mixture exiting the high-pressure turbine is then transmitted via a plenum 84 to a low-pressure turbine 86.

PDTE 60 further includes a programmable controller 52 configured with algorithmic software to regulate a plurality of controllable peripheral PDC components that may include, for example, and without limitation, one or more fuel valves 74, one or more air valves 72, and one or more ignition devices 88. The controllable multi-tube pulse detonation combustor (PDC) 62 is configured to initiate firing of one or more PD tubes 70 in response to operation of the plurality of controllable peripheral PDC components to regulate PDTE output characteristic such as, and without limitation, PDTE shaft speed, PDTE output power, and PDTE output emissions. Programmable controller 52 directed by algorithmic software operates to control operation timing parameters for the plurality of controllable peripheral PDC components in response to PDTE input conditions, such that one or more PD tube operating conditions can be different for at least one PD tube relative to another PD tube within the multi-tube PDC 62, and further such that detonation timing can be different for at least one PD tube relative to another PD tube within the multi-tube PDC 62.

Programmable controller 52 is thus directed by the algorithmic software integrated therein to regulate the controllable PDC 62 including pulse detonation tubes 70 such that turbine inlet conditions are met in order to achieve the desired overall PDTE output conditions such as, without limitation, shaft speed, power, or emissions output 16.

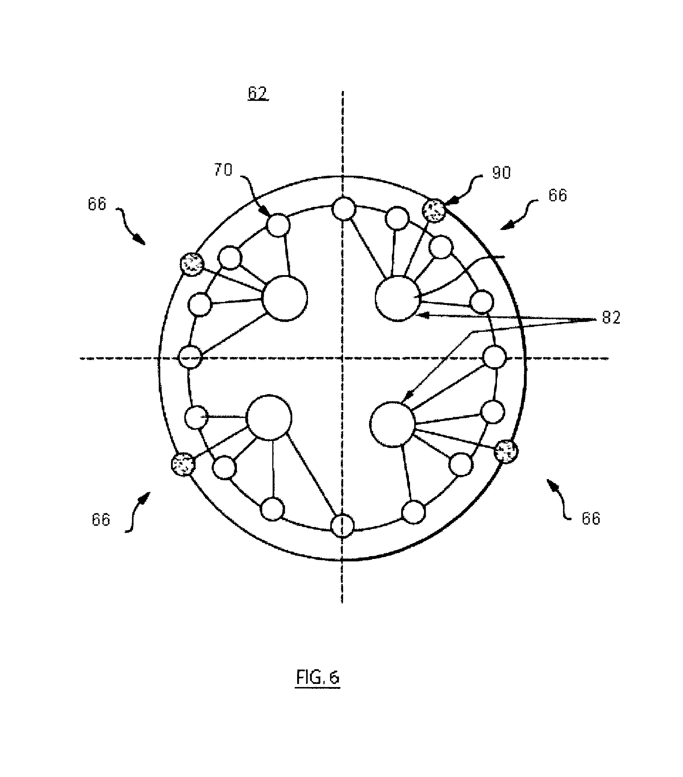

Figure 6 is a cross-sectional axial view of a multi-tube PDC 62 suitable for use with the PDTE 60 shown in Figure 5 according to one embodiment. The PDC 62 can be seen to comprise four bundles 66, each with four PD tubes 70. Each bundle 66 delivers detonation products into a corresponding turbine inlet combustor tube 82.

The PDC tubes 70 are arranged in a circular fashion to provide a balanced load on the high pressure turbine during firing of the PDC 62.

Figure 7 is a diagram illustrating ramp-up 92 and ramp-down 94 phases of the PDTE 60 shown in Figure 5 according to one embodiment. The ramp-up and ramp-down phases 92 and 94 are controlled by the controller 52 depicted in Figures 4 and 5.

According to one embodiment, the turbomachinery speed N is ramped up to the speed corresponding to the desired percentage of rated power conditions during ramp-up mode 92. According to one aspect, this action increases the mass flow rate (-N) through the PDTE 60 to the mass flowrate corresponding to the desired percentage of rated power conditions.

In summary explanation, PDTE rotational shaft speed, output power and output emissions commands are first transmitted to a PDTE according to one embodiment. A corresponding PDC including pulse detonation tubes is then regulated in response to the input commands in order to achieve the commanded PDTE shaft speed, output power and output emissions. A corresponding PDC controller generates component timing signals in response to the commanded PDTE shaft speed, output power and output emissions, to affect operation parameters such as, without limitation, fuel and/or air fill fraction, purge fraction, equivalence ratio distribution in the detonation tubes, and tube-to-tube relative timing to achieve the desired PDTE operation characteristics. Finally, the air inlet valve open time period, the fuel fill time period and the time of detonation for each PD tube is adjusted in response to the respective controller signals to achieve the commanded output, while the PDTE is operating in an acceleration mode, deceleration mode, or at a constant output. Sensing variables used by the algorithmic software may include, without limitation, fuel fill length, fuel supply pressure, fuel flow rates, and generated power.

The power generated via the PDTE can be determined and controlled using one or more control limit techniques familiar to those skilled in the art of power generation engines. These control limits may include, without limitation, speed limits, pressure limits, temperature limits, and/or mass flow limits. Further details of such known control limit techniques are not discussed herein for brevity and to improve clarity regarding the principles described herein.

In further summary explanation, several different operational techniques have been described to modulate output conditions for a PDTE. The commanded shaft speed, output power, and/or output emissions, for example, can be achieved by varying the firing pattern repetition rate (e.g. frequency), skip firing, fill fraction, equivalence ratio, detonation versus quasi-detonation, exit nozzle area, and inlet mass flow of individual PDC tubes or groups of PDC tubes such that operating parameters can vary from tube-to-tube, or from one group of tubes to another group of tubes, and further such that tube-to-tube relative ignition timing can vary between tubes or groups of tubes.

While only certain features of the invention have been illustrated and described herein, many modifications and changes will occur to those skilled in the art. It is, therefore, to be understood that the appended claims are intended to cover all such modifications and changes as fall within the scope of the invention.

For completeness, various aspects of the invention are now set out in the following numbered clauses:
1. A pulse detonation turbine engine (PDTE) comprising:
   a plurality of controllable peripheral PDC components;
   a controllable multi-tube pulse detonation combustor (PDC) configured to initiate firing of one or more PD tubes in response to operation of the plurality of controllable peripheral PDC components to regulate PDTE output characteristics; and
   a control system comprising a programmable controller directed by algorithmic software to generate control inputs for the plurality of controllable peripheral PDC components in response to PDTE input conditions, such that one or more PD tube controllable inputs can be different for at least one PD tube relative to another PD tube within the multi-tube PDC, and further such that detonation timing can be different for at least one PD tube relative to another PD tube within the multi-tube PDC.
2. The PDTE according to clause 1, wherein the control system operates to generate the control inputs for the plurality of controllable peripheral PDC components during at least one of a ramp-up power cycle for the PDTE, a ramp-down power cycle for the PDTE, and constant PDTE output conditions.
3. The PDTE according to clause 1, wherein the plurality of controllable peripheral PDC components is selected from air valve type components, fuel valve type components, and spark ignition type components.
4. The PDTE according to clause 1, wherein the PDTE output characteristics include at least one of PDTE shaft speed, PDTE output power, and PDTE emissions.
5. The PDTE according to clause 1, wherein the control system comprises a single control loop configured to regulate the PDC and the PDTE.
6. The PDTE according to clause 1, wherein the controllable multi-tube PDC operates to vary the firing pattern repetition rate of a plurality of pulse detonation tubes in response to the operation of the plurality of controllable peripheral PDC components.
7. The PDTE according to clause 1, wherein the controllable multi-tube PDC operates to skip fire one or more pulse detonation tubes in response to the operation of the plurality of controllable peripheral PDC components.
8. The PDTE according to clause 1, wherein the controllable multi-tube PDC operates to vary the firing pattern of a plurality of pulse detonation tubes in response to the operation of the plurality of controllable peripheral PDC components.
9. The PDTE according to clause 1, wherein the controllable multi-tube PDC operates to vary the fuel fill fraction of at least one pulse detonation tube in response to the operation of the plurality of controllable peripheral PDC components.
10. The PDTE according to clause 1, wherein the controllable multi-tube PDC operates to vary the exit nozzle area of at least one pulse detonation tube in response to the operation of the plurality of controllable peripheral PDC components.
11. The PDTE according to clause 1, wherein the controllable multi-tube PDC operates to vary the inlet mass flow of at least one corresponding pulse detonation tube in response to the operation of the plurality of controllable peripheral PDC components.
12. The PDTE according to clause 1, wherein the controllable multi-tube PDC operates to prevent full deflagration-to-detonation of at least one pulse detonation tube in response to the operation of the plurality of controllable peripheral PDC components, such that combustion is limited to quasi-detonation.
13. The PDTE according to clause 1, wherein the controllable multi-tube PDC operates to vary fuel-to-air ratio of at least one pulse detonation tube in response to the operation of the plurality of controllable peripheral PDC components, such that engine thrust is controllably reduced below its optimum level.
14. The PDTE according to clause 1, wherein the control system comprises:
   a first control loop configured to regulate the output of the PDTE; and
   a second control loop configured to regulate the PDC based on reference data generated via the first control loop.
15. The PDTE according to clause 14, wherein the first control loop operates at a different rate than the second control loop, such that the PDC control loop time scale operates in harmony with the PDTE control loop time scale.
16. The PDTE according to clause 14, wherein the controllable multi-tube PDC operates to vary the firing pattern repetition rate of a plurality of pulse detonation tubes in response to the first control loop reference data.
17. The PDTE according to clause 14, wherein the controllable multi-tube PDC operates to skip fire one or more pulse detonation tubes in response to the first control loop reference data.
18. The PDTE according to clause 14, wherein the controllable multi-tube PDC operates to vary the firing pattern of a plurality of pulse detonation tubes in response to the first control loop reference data.
19. The PDTE according to clause 14, wherein the controllable multi-tube PDC operates to vary the fuel fill fraction of at least one pulse detonation tube in response to the first control loop reference data.
20. The PDTE according to clause 14, wherein the controllable multi-tube PDC operates to vary the exit nozzle area of at least one pulse detonation tube in response to the first control loop reference data.
21. The PDTE according to clause 14, wherein the controllable multi-tube PDC operates to vary the inlet mass flow of at least one corresponding pulse detonation tube in response to the first control loop reference data.
22. The PDTE according to clause 14, wherein the controllable multi-tube PDC operates to prevent full deflagration-to-detonation of at least one pulse detonation tube in response to the first control loop reference data, such that combustion is limited to quasi detonation.
23. The PDTE according to clause 14, wherein the controllable multi-tube PDC operates to vary fuel-to-air ratio of at least one pulse detonation tube in response to the first control loop reference data, such that engine thrust is controllably reduced below its optimum level.
24. The PDTE according to clause 1, wherein the control system comprises:
   a first control loop configured to regulate the output of the PDTE;
   a second control loop configured to regulate at least one PDC tube bundle based on reference data generated via the first control loop; and
   a third control loop configured to regulate individual pulse detonation tubes based on reference data generated via the second control loop.
25. The PDTE according to clause 24, wherein each control loop is configured to operate at a rate to accommodate disparate control loop time scales between itself and any other control loop.
26. The PDTE according to clause 24, wherein the controllable multi-tube PDC operates to vary the firing pattern repetition rate of a plurality of pulse detonation tubes in response to the second control loop reference data.
27. The PDTE according to clause 24, wherein the controllable multi-tube PDC operates to skip fire at least one corresponding pulse detonation tube in response to the second control loop reference data.
28. The PDTE according to clause 24, wherein the controllable multi-tube PDC operates to vary the firing pattern of a plurality of pulse detonation tubes in response to the second control loop reference data.
29. The PDTE according to clause 24, wherein the controllable multi-tube PDC operates to vary the fuel fill fraction of at least one pulse detonation tube in response to the second control loop reference data.
30. The PDTE according to clause 24, wherein the controllable multi-tube PDC operates to vary the exit nozzle area of at least one pulse detonation tube in response to the second control loop reference data.
31. The PDTE according to clause 24, wherein the controllable multi-tube PDC operates to vary the inlet mass flow of at least one pulse detonation tube in response to the second control loop reference data.
32. The PDTE according to clause 24, wherein the controllable multi-tube PDC operates to prevent full deflagration-to-detonation of at least one pulse detonation tube in response to the second control loop reference data, such that combustion is limited to quasi-detonation.
33. The PDTE according to clause 24, wherein the controllable multi-tube PDC operates to vary fuel-to-air ratio of at least one corresponding pulse detonation tube in response to the second control loop reference data, such that engine thrust is controllably reduced below its optimum level.

## Claims

1. A pulse detonation turbine engine (PDTE) (50) comprising:
a plurality of controllable peripheral PDC components (57);
a controllable multi-tube pulse detonation combustor (PDC) (54) configured to initiate firing of one or more PD tubes in response to operation of the plurality of controllable peripheral PDC components (57) to regulate PDTE output characteristics; and
a control system comprising a programmable controller (52) directed by algorithmic software to generate control inputs for the plurality of controllable peripheral PDC components (57) in response to PDTE input conditions, such that one or more PD tube controllable inputs can be different for at least one PD tube relative to another PD tube within the multi-tube PDC (54), and further such that detonation timing can be different for at least one PD tube relative to another PD tube within the multi-tube PDC (54).

2. The PDTE (50) according to claim 1, wherein the control system operates to generate the control inputs for the plurality of controllable peripheral PDC components (57) during at least one of a ramp-up power cycle for the PDTE (50), a ramp-down power cycle for the PDTE (50), and constant PDTE output conditions.

3. The PDTE (50) according to claim 1 or 2, wherein the plurality of controllable peripheral PDC components (57) is selected from air valve type components, fuel valve type components, and spark ignition type components.

4. The PDTE (50) according to any of the preceding claims, wherein the PDTE output characteristics include at least one of PDTE shaft speed, PDTE output power, and PDTE emissions.

5. The PDTE (50) according to any of the preceding claims, wherein the control system comprises a single control loop configured to regulate the PDC (54) and the PDTE (50).

6. The PDTE (50) according to any of the preceding claims, wherein the controllable multi-tube PDC (54) operates to achieve at least one of varying the firing pattern repetition rate of a plurality of pulse detonation tubes in response to the operation of the plurality of controllable peripheral PDC components (57), skip firing one or more pulse detonation tubes in response to the operation of the plurality of controllable peripheral PDC components (57), varying the firing pattern of a plurality of pulse detonation tubes in response to the operation of the plurality of controllable peripheral PDC components (57), varying the fuel fill fraction of at least one pulse detonation tube in response to the operation of the plurality of controllable peripheral PDC components (57), varying the exit nozzle area of at least one pulse detonation tube in response to the operation of the plurality of controllable peripheral PDC components (57), varying the inlet mass flow of at least one corresponding pulse detonation tube in response to the operation of the plurality of controllable peripheral PDC components (57), and preventing full deflagration-to-detonation of at least one pulse detonation tube in response to the operation of the plurality of controllable peripheral PDC components (57) such that combustion is limited to quasi-detonation.

7. The PDTE (50) according to claim 1, wherein the control system comprises:
a first control loop configured to regulate the output of the PDTE (50); and
a second control loop configured to regulate the PDC (54) based on reference data generated via the first control loop.

8. The PDTE (50) according to claim 7, wherein the first control loop operates at a different rate than the second control loop, such that the PDC (54) control loop time scale operates in harmony with the PDTE (50) control loop time scale.

9. The PDTE (50) according to any of the preceding claims, wherein the control system comprises:
a first control loop configured to regulate the output of the PDTE (50);
a second control loop configured to regulate at least one PDC (54) tube bundle based on reference data generated via the first control loop;
a third control loop configured to regulate individual pulse detonation tubes based on reference data generated via the second control loop.

10. The PDTE (50) according to claim 9, wherein each control loop is configured to operate at a rate to accommodate disparate control loop time scales between itself and any other control loop.

11. The PDTE according to claim 9 or 10, wherein the controllable multi-tube PDC operates to vary the firing pattern repetition rate of a plurality of pulse detonation tubes in response to the second control loop reference data.

12. The PDTE according to any of claims 9 to 11, wherein the controllable multi-tube PDC operates to skip fire at least one corresponding pulse detonation tube in response to the second control loop reference data.

13. The PDTE according to any of claims 9 to 12, wherein the controllable multi-tube PDC operates to vary the firing pattern of a plurality of pulse detonation tubes in response to the second control loop reference data.

14. The PDTE according to any of claims 9 to 13, wherein the controllable multi-tube PDC operates to vary the fuel fill fraction of at least one pulse detonation tube in response to the second control loop reference data.

15. The PDTE according to any of claims 9 to 14, wherein the controllable multi-tube PDC operates to vary the exit nozzle area of at least one pulse detonation tube in response to the second control loop reference data.
